# EUROPÄISCHE PATENTSCHRIFT

(11) **EP 0 714 809 B1**
(45) Veröffentlichungstag und Bekanntmachung des Hinweises auf die Patenterteilung: **12.01.2000**
(21) Anmeldenummer: 95115818.7
(22) Anmeldetag: 07.10.1995
(51) Int. Cl.: B60Q 1/068, F16B 5/02

(54) **Scheinwerfer für Fahrzeuge**
Headlight for vehicle
Phare de véhicule

(30) Priorität: 27.10.1994 DE 4438328
(43) Veröffentlichungstag der Anmeldung: 05.06.1996
(73) Patentinhaber: ROBERT BOSCH GMBH, 70442 Stuttgart (DE)
(72) Erfinder: Bertling, Johannes, Dr. Dipl.-Ing., D-71665 Vaihingen (DE); Daumueller, Hans, D-72411 Bodelshausen (DE); Dobler, Karl-Otto, D-72768 Reutlingen (DE); Mueller, Juergen, Dipl.-Ing. (FH), D-72461 Albstadt (DE); Streit, Lothar, Dipl.-Ing. (FH), D-72820 Sonnenbuehl (DE); Vent, Albert, Dipl.-Ing., D-72800 Eningen (DE)

(56) Entgegenhaltungen:
- EP-A- 0 224 739
- EP-A- 0 580 496
- DE-A- 2 847 908
- DE-U- 9 213 169
- FR-A- 2 252 000
- GB-A- 1 024 610
- GB-A- 2 126 701
- NL-C- 87 900
- US-A- 2 137 092
- US-A- 2 194 373

## Beschreibung

Die Erfindung betrifft einen Scheinwerfer für Fahrzeug nach der Gattung des Anspruchs 1 und der Gattung des Anspruchs 2.

Ein Scheinwerfer nach der Gattung des Anspruchs 1 ist durch die US-A-2 194 373 bekannt. Dieser Scheinwerfer weist einen Scheinwerfereinsatz auf, der einen Reflektor umfaßt und der an einer Aufnahme schwenkbar gehalten ist. Der Scheinwerfer weist außerdem eine Verstellvorrichtung auf, durch die der Scheinwerfereinsatz zur Einstellung der Ausrichtung seiner optischen Achse schwenkbar ist. Die Verstellvorrichtung umfaßt mehrere Schraubenbolzen, die von der Rückseite des Scheinwerfereinsatzes etwa horizontal abstehen und die durch jeweils eine Öffnung in einem Teil der Aufnahme hindurchtreten und an diesem mittels wenigstens eines Mutterteils fixierbar sind. Die Schraubenbolzen sind mit dem Scheinwerfereinsatz fest verbunden. Auf die Schraubenbolzen ist zwischen dem Scheinwerfereinsatz und dem Aufnahmeteil ein erstes Mutterteil aufgeschraubt und auf dem durch die Öffnung im Aufnahmeteil hindurchragenden Abschnitt des Schraubenbolzens ist ein zweites Mutterteil aufgeschraubt. Beide Mutterteile sind zur Fixierung des Schraubenbolzens in Anlage am Aufnahmeteil bringbar. Bei gelöstem einem Mutterteil ist durch Drehung des anderen Mutterteils der Scheinwerfereinsatz zur Einstellung der Ausrichtung der optischen Achse verschwenkbar. Nachteilig bei diesem bekannten Scheinwerfer ist, daß mehrere Schraubenbolzen erforderlich sind und daß diese nicht von der Oberseite des Scheinwerfers her zugänglich sind. Durch dieses Dokument ist außerdem eine andere Ausführung des Scheinwerfers bekannt, bei der eine Verstellschraube vorgesehen ist, die von oben her zugänglich ist, die jedoch nur eine Einstellung der Ausrichtung der optischen Achse des Scheinwerfereinsatzes in einer vertikalen Längsebene ermöglicht.

Ein Scheinwerfer nach der Gattung des Anspruchs 2 ist durch die FR-A-22 52 000 bekannt. Dieser Scheinwerfer weist einen Scheinwerfereinsatz auf, der einen Reflektor umfaßt und der an einer Aufnahme schwenkbar gehalten ist. Der Scheinwerfer weist eine Verstellvorrichtung auf, durch die der Scheinwerfereinsatz zur Einstellung der Ausrichtung seiner optischen Achse in einer horizontalen Längsebene schwenkbar ist. Die Verstelleinrichtung umfaßt eine Verstellschraube, die durch eine Öffnung in einem Teil der Aufnahme hindurchtritt und an diesem mittels eines Mutterteils fixierbar ist. Die Verstellschraube ist in Einbaulage des Scheinwerfers horizontal angeordnet und weist einen sich an der Vorderseite des Aufnahmeteils abstützenden Kopf auf. Die Verstellschraube ist mit ihrem hinteren Ende in eine Gewindebohrung im Scheinwerfereinsatz eingeschraubt. Das Mutterteil ist zwischen dem Scheinwerfereinsatz und dem Aufnahmeteil auf die Verstellschraube aufgeschraubt und zur Fixierung der Verstellschraube in Anlage an die Rückseite des Aufnahmeteils bringbar. Bei gelöstem Mutterteil ist die Verstellschraube zur Einstellung der Ausrichtung der optischen Achse in der horizontalen Längsebene verdrehbar. Die Verstellschraube ist bei diesem Scheinwerfer nicht von der Oberseite her zugänglich. Außerdem ist durch die Verstellvorrichtung keine Einstellung der Ausrichtung der optischen Achse in einer vertikalen Längsebene ermöglicht.

Darüberhinaus ist durch die EP-A-0 580 496 ein Scheinwerfer bekannt, bei dem zwischen dem Scheinwerfereinsatz und einem diesen umgebenden Abschnitt einer Aufnahme zur Abdichtung des Innenraums des Scheinwerfers ein elastisch verformbares Dichtelement eingespannt ist. Das elastisch verformbare Element dient dabei nur zur Abdichtung und hat keine Lagerfunktion für den Scheinwerfereinsatz und die Verstellvorrichtung bei diesem Scheinwerfer ermöglicht eine Einstellung der Ausrichtung der optischen Achse des Scheinwerfereinsatzes nur in einer Längsebene.

Der Scheinwerfer mit den Merkmalen gemäß Anspruch 1 oder den Merkmalen gemäß dem unabhängigen Anspruch 2 hat den Vorteil, daß die Verstellvorrichtung von der Oberseite des Scheinwerfers her betätigt werden kann und außerdem ohne zusätzliche Teile eine Einstellung der Ausrichtung der optischen Achse des Scheinwerfereinsatzes in einer vertikalen und in einer horizontalen Längsebene ermöglicht ist.

In den abhängigen Ansprüchen sind vorteilhafte Ausgestaltungen und Weiterbildungen der Erfindung angegeben. Durch die Ausbildung gemäß Anspruch 4 ist sichergestellt, daß auch bei einer Schräg-Stellung des Schraubenbolzens bzw. der Verstellschraube am Aufnahmeteil eine flächige Anlage der Mutterteile bzw. des Schraubenkopfes besteht und somit eine sichere Fixierung des Schraubenbolzens bzw. der Verstellschraube ermöglicht ist. Die Ausbildung gemäß Anspruch 6 ermöglicht eine Kontrolle der Einstellung der Ausrichtung der optischen Achse des Scheinwerfereinsatzes in der horizontalen Längsebene. Die Ausbildung gemäß Anspruch 8 ermöglicht eine besonders einfache schwenkbare Lagerung des Scheinwerfereinsatzes in der Aufnahme. Durch die Ausbildung gemäß Anspruchs 13 ist sichergestellt, daß der Scheinwerfereinsatz bei der Einstelllung der Ausrichtung der optischen Achse in einer horizontalen Längsebene nicht verdreht werden kann.

### Zeichnung

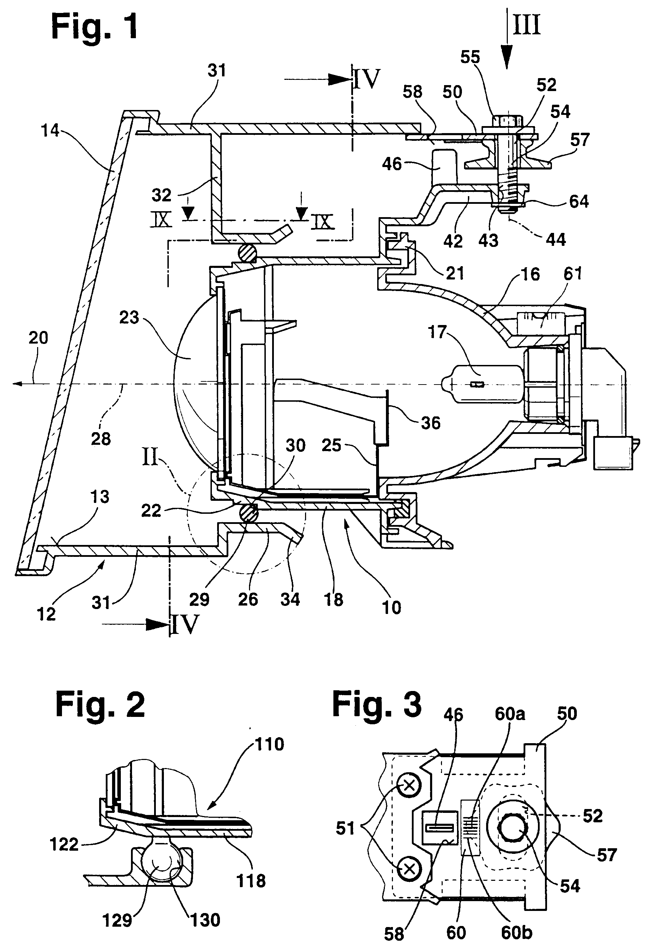

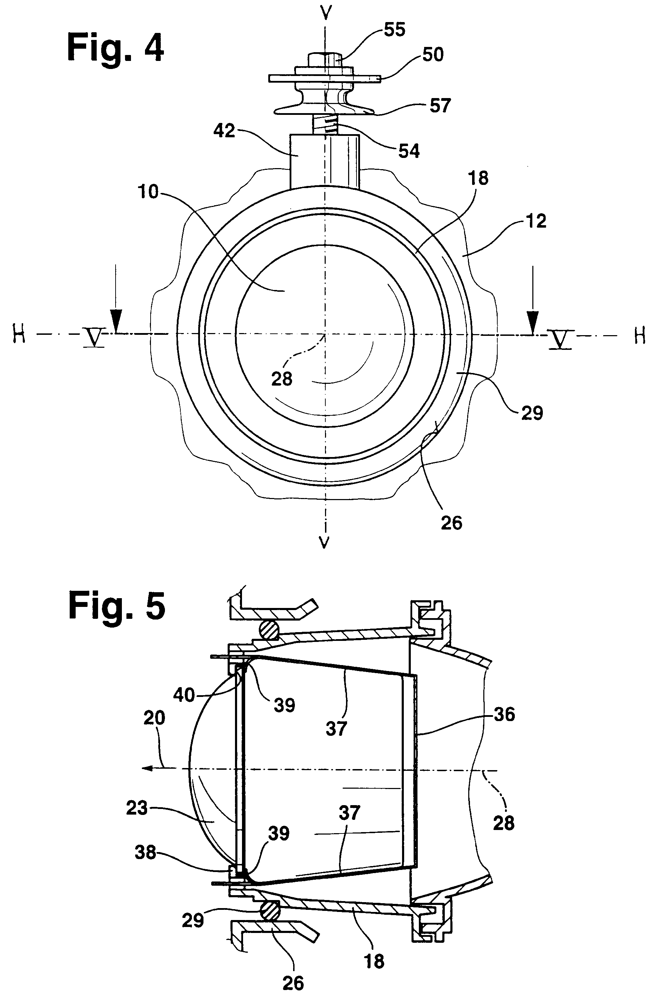

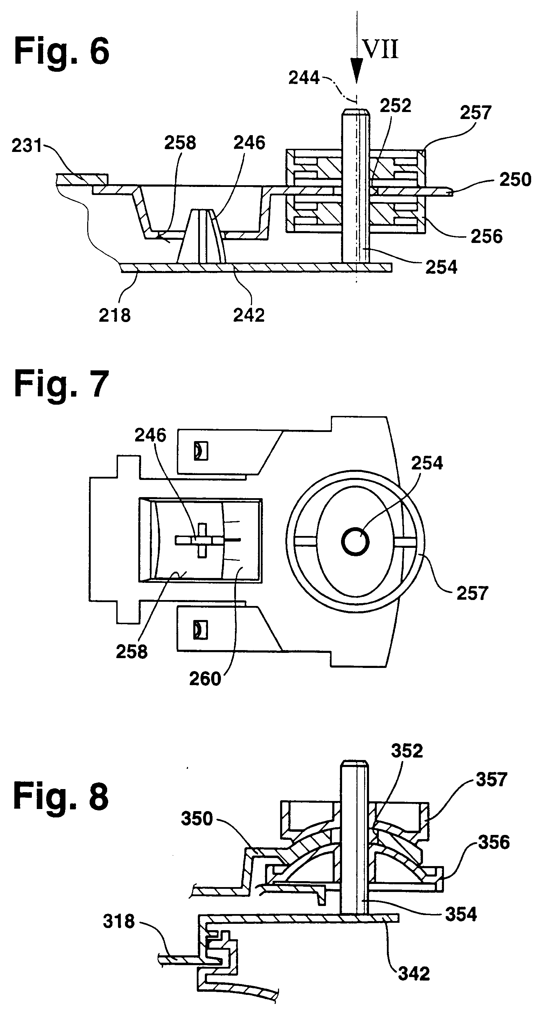

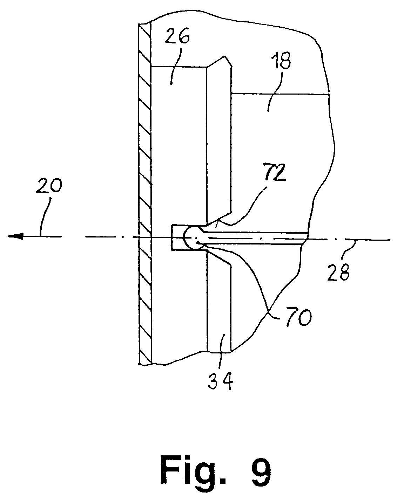

Drei Ausführungsbeispiele der Erfindung sind in der Zeichnung dargestellt und in der nachfolgenden Beschreibung näher erläutert. Es zeigen Figur 1 einen Scheinwerfer für Fahrzeuge mit einer Aufnahme und Verstellvorrichtung für diesen gemäß einem ersten Ausführungsbeispiel in einem vertikalen Längsschnitt, Figur 2 den Scheinwerfer ausschnittsweise mit einer modifizierten Lagerung, Figur 3 den Scheinwerfer abschnittsweise in einer Ansicht in Pfeilrichtung III in Figur 1, Figur 4 den Scheinwerfer in einem Querschnitt entlang Linie IV-IV in Figur 1, Figur 5 den Scheinwerfer ausschnittsweise in einem horizontalen Längsschnitt entlang Linie V-V in Figur 4, Figur 6 den Scheinwerfer mit der Verstellvorrichtung gemäß einem zweiten Ausführungsbeispiel abschnittsweise in einem Längsschnitt, Figur 7 den Scheinwerfer abschnittsweise in einer Ansicht in Pfeilrichtung VII in Figur 6, Figur 8 den Scheinwerfer mit der Verstellvorrichtung gemäß einem dritten Ausführungsbeispiel abschnittsweise in einem Längsschnitt und Figur 9 den Scheinwerfer ausschnittsweise in einem Schnitt entlang Linie IX-IX in Figur 1.

### Beschreibung der Ausführungsbeispiele

Ein in den Figuren 1 bis 9 dargestellter Scheinwerfer für Fahrzeuge, insbesondere Kraftfahrzeuge, weist einen Scheinwerfereinsatz 10 auf, der in einer Aufnahme 12 angeordnet ist. Die Aufnahme 12 ist ein Teil der Karosserie des Fahrzeugs, kann jedoch auch ein mit der Karosserie verbundener Tragrahmen oder ein mit der Karosserie verbundenes Gehäuse sein. Die Aufnahme 12 weist eine Lichtaustrittsöffnung 13 auf, die mit einer lichtdurchlässigen Abdeckscheibe 14 verschlossen ist. Die Abdeckscheibe 14 kann als glatte Scheibe ausgebildet sein oder mit optisch wirksamen Elementen versehen sein. Der Scheinwerfereinsatz 10 besteht aus einem Reflektor 16, einer in diesen eingesetzten Lichtquelle 17, einem rohrartigen Trägerteil 18, das mit dem in Lichtaustrittsrichtung 20 weisenden Vorderrand 21 des Reflektors 16 verbunden ist, einer am in Lichtaustrittsrichtung 20 weisenden Vorderrand 22 des Trägerteils 18 angeordneten Linse 23 und einer innerhalb des Trägerteils 18 im Bereich des Vorderrands 21 des Reflektors 16 angeordneten Blende 25. Der Scheinwerfereinsatz 10 ist ein sogenannter Projektions-Scheinwerfereinsatz. Der Scheinwerfereinsatz kann jedoch auch als Reflexionssystem ausgebildet sein und besteht dann nur aus dem Reflektor, an dessen Vorderrand gegebenenfalls eine Abdeckscheibe befestigt ist, der in den Reflektor eingesetzten Lichtquelle und gegebenenfalls einem den Reflektor aufnehmenden Tragrahmen.

Der Scheinwerfereinsatz 10 ist in seinem in Lichtaustrittsrichtung 20 weisenden vorderen Bereich, das heißt im Bereich des Vorderrands 22 des Trägerteils 18 in der Aufnahme 12 in einer vertikalen Längsebene VV schwenkbar gelagert. Ist der Scheinwerfereinsatz als Reflexionssystem ausgebildet, so ist er im Bereich des Vorderrands des Reflektors schwenkbar gelagert. Der Scheinwerfereinsatz 10 ist räumlich schwenkbar gelagert, das heißt zusätzlich auch in einer horizontalen Längsebene HH schwenkbar. Das Trägerteil 18 ist zumindest im Bereich seines Vorderrands 22 in einem Abschnitt 26 der Aufnahme 12 angeordnet und von diesem auf seinem Umfang umgeben. Bei den dargestellten Ausführungsbeispielen sind das Trägerteil 18 und der Aufnahmeabschnitt 26 im Querschnitt senkrecht zur optischen Achse 28 des Scheinwerfereinsatzes 10 wie in Figur 4 dargestellt gerundet ausgebildet, beispielsweise kreisförmig oder oval. Die Querschnittsform des Trägerteils 18 und des Aufnahmeabschnitts 26 können auch anders ausgebildet sein, beispwielsweise rechteckig, wobei jedoch eine Schwenkbewegung des Trägerteils 18 im Aufnahmeabschnitt 26 in der vertikalen Längsebene VV und auch in der horizontalen Längsebene HH möglich ist. Der Aufnahmeabschnitt 26 ist allgemein in seiner Querschnittsform an die Querschnittsform des Trägerteils 18 angepaßt. Zwischen dem Außenumfang des Trägerteils 18 und dem Innenumfang des Aufnahmeabschnitts 26 ist ein elastisches Element 29 eingespannt, so daß das Trägerteil 18 spielfrei im Aufnahmeabschnitt 28 aufgenommen ist. Das elastische Element 29 ist als ein Dichtring ausgebildet, der das Trägerteil 18 auf dessen gesamtem Umfang umgibt. Der Vorderrand 22 des Trägerteils 18 weist in Lichtaustrittsrichtung 20 einen Bereich mit verringertem Durchmesser auf, so daß am Umfang des Trägerteils 18 eine in Lichtaustrittsrichtung 20 weisende Stufe 30 gebildet ist. An dieser Stufe 30 stützt sich entgegen Lichtaustrittsrichtung 20 der Dichtring 29 ab. Das Trägerteil 18 kann im Bereich seines Vorderrands 22 in seinem Umfang auch mit einer umlaufenden Ringnut versehen sein, in der der Dichtring 29 angeordnet ist. Durch den Dichtring 29 wird ein Eindringen von Schmutz und Feuchtigkeit in den Bereich der Aufnahme 12 verhindert, in dem der Scheinwerfereinsatz 10 angeordnet ist.

Der Aufnahmeabschnitt 26 ist entgegen Lichtaustrittsrichtung 20 von der Lichtaustrittsöffnung 13 der Aufnahme 12 entfernt angeordnet und ist im Querschnitt senkrecht zur optischen Achse 28 kleiner ausgebildet als die Lichtaustrittsöffnung 13. Der Aufnahmeabschnitt 26 ist einstückig mit der Aufnahme 12 ausgebildet und über Wände 31 mit dem die Lichtaustrittsöffnung 13 umgebenden Vorderrand der Aufnahme 12 verbunden. Der Aufnahmeabschnitt 26 ist in Einbaulage des Scheinwerfers im Fahrzeug zum unteren Rand der Aufnahme 12 hin versetzt angeordnet, wobei oberhalb des Aufnahmeabschnitts 26 eine sich etwa vertikal erstreckende Wandung 32 der Aufnahme 12 ausgebildet ist, durch die der hinter dieser liegende Bereich verdeckt wird, so daß dieser von außerhalb des Scheinwerfers nicht einsehbar ist. Der Aufnahmeabschnitt 26 ist etwa hohlzylinderförmig ausgebildet und weist mit seinem freien Ende 34 entgegen Lichtaustrittsrichtung 20. Das freie Ende 34 des Aufnahmeabschnitts 26 erweitert sich entgegen Lichtaustrittsrichtung 20, wobei die Erweiterung beispielsweise konisch erfolgen kann. Der Scheinwerfereinsatz 10 ist somit im Aufnahmeabschnitt 26 schwenkbar aufgenommen und ist unter elastischer Verformung des Elements 29 in beliebige Richtungen schwenkbar.

Der Scheinwerfereinsatz 10 ist im Aufnahmeabschnitt 26 gegen Verdrehen um die optische Achse 28 gesichert. Die Verdrehsicherung wird wie in Figur 9 dargestellt durch einen vom Trägerteil 18 nach oben abstehenden Vorsprung 70 erreicht, der in eine sich parallel zur optischen Achse 28 erstreckende Ausnehmung 72 im freien Ende 34 des Aufnahmeabschnitts 26 mit geringem Spiel in tangentialer Richtung bezüglich der optischen Achse 28 eingreift. Der Vorsprung 70 ist in der Ausnehmung 72 in Richtung der optischen Achse 28 verschiebbar, um ein Schwenken des Scheinwerfereinsatzes 10 zur Einstellung der Ausrichtung der optischen Achse 28 in der vertikalen Längsebene VV nicht zu behindern. Das in der Ausnehmung 72 angeordnete Ende des Vorsprungs 70 ist kugelförmig ausgebildet und die Ausnehmung 72 erweitert sich in ihrem Randbereich entgegen Lichtaustrittsrichtung 20, so daß der Scheinwerfereinsatz 10 zur Einstellung der Ausrichtung der optischen Achse 28 in der horizontalen Längsebene HH geschwenkt werden kann. Die Anordnung des Vorsprungs 70 und der Ausnehmung 72 kann auch umgekehrt sein, so daß der Vorsprung am Aufnahmeabschnitt 26 angeordnet ist un die Ausnehmung am Trägerteil. Schließlich können der Vorsprung 70 und die Ausnehmung 72 auch an beliebigen anderen Stellen am Umfang des Aufnahmeabschnitts 26 und des Trägerteils 18 angeordnet sein.

In Figur 2 ist der Scheinwerfer ausschnittsweise mit einer modifizierten Lagerung dargestellt. Der Scheinwerfereinsatz 110 ist im wesentlichen gleich aufgebaut wie der vorstehend beschriebene Scheinwerfereinsatz 10. Das Trägerteil 118 des Scheinwerfereinsatzes 110 weist im Bereich seines Vorderrands 122 einen nach unten abstehenden Kugelzapfen 129 auf, der in einer Kugelzapfenaufnahme 130 der Aufnahme schwenkbar aufgenommen ist. Auch bei dieser Ausführung des Scheinwerfers ist der Scheinwerfereinsatz 110 räumlich schwenkbar in der Aufnahme angeordnet. Der Scheinwerfereinsatz 110 ist hierbei ebenfalls gegen Verdrehen um die optische Achse 28 gesichert.

Das Trägerteil 18 des Scheinwerfereinsatzes 10 gemäß Figur 1 ist fest mit dem Vorderrand 21 des Reflektors 16 verbunden, beispielsweise verklebt oder mittels einer Rastverbindung. Die Blende 25 ist im Trägerteil 18 befestigt und deren eigentlicher Blendenabschnitt 36 ist etwa in der Ebene des Vorderrands 21 des Reflektors 16 angeordnet. Der Blendenabschnitt 36 erstreckt sich senkrecht zur optischen Achse 28 und im wesentlichen unterhalb von dieser und bildet im Betrieb des Scheinwerfers eine obere Helldunkelgrenze des aus dem Scheinwerfer austretenden Lichtbündels. Die Blende 25 weist außerdem wie in Figur 5 dargestellt zwei vom Blendenabschnitt 36 in Lichtaustrittsrichtung 20 abstehende Arme 37 auf, deren Enden durch jeweils eine Öffnung in der die Linse 23 umgebenden vorderen Stirnwand 38 des Trägerteils 18 hindurchragen. Innerhalb des Trägerteils 18 ist vor der Linse 23 an jedem Arm 37 jeweils ein Haken 39 radial nach innen über den Rand der Linse 23 umgebogen, durch die die Linse 23 in der Anlage an einer Stufe 40 am Vorderrand 22 der Stirnwand 38 des Trägerteils 18 gehalten wird.

Bei einem in den Figuren 1 bis 4 dargestellten ersten Ausführungsbeispiel einer Verstellvorrichtung des Scheinwerfers steht im Bereich des Vorderrands 21 des Reflektors 16 vom Trägerteil 18 in Einbaulage des Scheinwerfers am Fahrzeug nach oben ein Arm 42 ab, der sich mit Abstand zum Reflektor 16 entgegen Lichtaustrittsrichtung 20 erstreckt und im Bereich seines freien Endes eine etwa Gewindebohrung 43 aufweist, deren Achse 44 zumindest annähernd senkrecht zur optischen Achse 28 und in vertikaler Richtung verläuft. Die Achse 44 der Gewindebohrung 43 liegt in einer die optische Achse 28 enthaltenden, in Figur 4 markierten vertikalen Längsebene VV des Scheinwerfereinsatzes 10. Das Trägerteil 18 besteht vorzugsweise aus Kunststoff, wobei der Arm 42 einstückig mit diesem ausgebildet ist. Das Trägerteil 18 kann jedoch auch aus Blech bestehen und der Arm 42 kann als separates Teil ausgebildet sein, das mit dem Trägerteil 18 verbunden ist. Der Arm 42 kann außerdem gegebenenfalls eine nach oben von diesem abstehende Nase 46 aufweisen, deren Funktion nachstehend noch erläutert wird.

Die obere Wand 31 der Aufnahme 12 erstreckt sich entgegen Lichtaustrittsrichtung 20 über den Scheinwerfereinsatz 10 hinweg bis nahe zum freien Ende des Arms 42 des Trägerteils 18. Mit der Wand 31 ist ein plattenförmiges Teil 50 fest verbunden, das somit einen Teil der Aufnahme 12 bildet und eine Verlängerung der Wand 31 darstellt. Die Platte 50 ist oberhalb des Arms 42 des Trägerteils 18 angeordnet und erstreckt sich in horizontaler Richtung betrachtet nur über einen Teil der Breite der Wand 31 im Bereich des Arms 42. Die Platte 50 ist an der Wand 31 beispielsweise mittels einer oder mehrerer Schrauben 51 befestigt und erstreckt sich zumindest annähernd senkrecht zur optischen Achse 28 und horizontal. Die Platte 50 kann beispielsweise aus Kunststoff bestehen und weist eine Öffnung 52 auf, die als Langloch ausgebildet ist, dessen Längserstreckung in horizontaler Richtung und zumindest annähernd senkrecht zur optischen Achse 28 verläuft. Das Langloch 52 kann gerade oder gekrümmt ausgebildet sein, mit dem Krümmungsmittelpunkt im vorderen Randbereich 22 des Scheinwerfereinsatzes 10. Durch das Langloch 52 ist von der Oberseite des Scheinwerfers her, das heißt in Pfeilrichtung III in Figur 1 eine Verstellschraube 54 gesteckt, die sich mit ihrem Kopf 55 an der Oberseite der Platte 50 am Rand neben dem Langloch 52 abstützt und deren mit der Längsachse 44 der Gewindebohrung 43 identische Längsachse zumindest annähernd vertikal und senkrecht zur optischen Achse 28 verläuft. Die Verstellschraube 54 ist in die Gewindebohrung 43 des Arms 42 eingeschraubt, wobei auf die Verstellschraube 54 im Bereich zwischen dem Arm 42 und der Platte 50 ein Mutterteil 57 aufgeschraubt ist, das auf der Verstellschraube 54 drehbar ist. Das Ende der Verstellschraube 54 ragt auf der Unterseite aus dem Arm 42 heraus und weist durch eine Ringnut auf, in die ein Sicherungsring 64 eingespannt ist. Das Mutterteil 57 weist einen solchen Durchmesser auf, daß an diesem zu dessen Verdrehung von der Oberseite oder von der Rückseite des Scheinwerfers von schräg oben her unterhalb der Platte 50 angegriffen werden kann. Die Platte 50 kann auch einstückig mit der oberen Wand 31 der Aufnahme 12 ausgebildet sein, wobei dann das Langloch 52 direkt im Endbereich der Wand 31 ausgebildet ist.

Die Platte 50 kann außerdem gegebenenfalls eine weitere Öffnung 58 aufweisen, durch die die Nase 46 des Arms 42 hindurchragt oder zumindest von der Oberseite des Scheinwerfers her in Pfeilrichtung III in Figur 1 betrachtet, wie in Figur 3 dargestellt, sichtbar ist. Die weitere Öffnung 58 ist wie das Langloch 52 langgestreckt ausgebildet und verläuft mit seiner Längserstreckung etwa Parallel zu der des Langlochs 52. Entlang der Längserstreckung der Öffnung 58 ist an deren Rand eine Skala 60 angeordnet, mit der die Nase 46 als Markierung zusammenwirkt.

Nachfolgend wird die Montage des Scheinwerfers und die Einstellung des Scheinwerfereinsatzes 10 erläutert. Der Scheinwerfereinsatz 10 wird als Einheit komplett vormontiert und auf den Vorderrand 22 des Trägerteils 18 wird der Dichtring 29 aufgeschoben. Der Scheinwerfereinsatz 10 wird von der Rückseite der Aufnahme 12 her in Lichtaustrittsrichtung 20 in den Aufnahmeabschnitt 26 eingeschoben, was durch die Erweiterung des freien Endbereichs des Aufnahmeabschnitts 26 einfach möglich ist. Der Vorsprung 70 wird dabei in die Ausnehmung 72 eingeführt. Die Verstellschraube 54 wird durch das Langloch 52 in der Platte 50 von oben her hindurchgesteckt und von unten her wird das Mutterteil 57 auf die Verstellschraube 54 aufgeschraubt. Anschließend wird die Verstellschraube 54 in die Gewindebohrung 43 im Arm 42 des Trägerteils 18 eingeschraubt und der Sicherungsring 64 wird in die Ringnut eingefügt. Wird das Mutterteil 57 auf der Verstellschraube 54 so weit nach oben geschraubt, daß es an der Unterseite der Platte 50 zur Anlage kommt und fest angezogen, so wird die Verstellschraube 54 an der Platte 50 fixiert, so daß sie weder in Richtung ihrer Längsachse 44 verschiebbar noch um ihre Längsachse 44 verdrehbar ist. In diesem Fall ist der Scheinwerfereinsatz 10 in der Aufnahme 12 fixiert.

Für eine Einstellung des Scheinwerfereinsatzes 10, das heißt der Ausrichtung von dessen optischer Achse 28, wird das Mutterteil 57 gelöst. Für eine Einstellung der Ausrichtung der optischen Achse 28 in der vertikalen Längsebene VV, das heißt der Neigung der optischen Achse 28, wird bei gelöstem Mutterteil 57 die Verstellschraube 54 verdreht, wodurch je nach Drehrichtung der Scheinwerfereinsatz 10 im Bereich seines Arms 42 durch die Gewindeverbindung mit der Verstellschraube 54 vertikal nach oben oder nach unten bewegt. Die Verstellschraube 54 befindet sich dabei mit ihrem Kopf 55 durch das Gewicht des Scheinwerfereinsatzes 10 bewirkt in der Anlage an der Oberseite der Platte 50. Durch den Sicherungsring 64 ist sichergestellt, daß die Verstellschraube 54 nicht ganz aus der Gewindebohrung 43 des Arms 42 herausgedreht werden kann. Der Scheinwerfereinsatz 10 führt bei einer Verdrehung der Verstellschraube 54 eine Schwenkbewegung um seinen im Aufnahmeabschnitt 26 über das elastische Element 29 spielfrei gelagerten vorderen Randbereich aus, so daß die Neigung der optischen Achse 28 in der vertikalen Längsebene VV verstellt wird. Der Vorsprung 70 wird dabei in der Ausnehmung 72 verschoben. Das elastische Element 29 kann dabei bei der Schwenkbewegung des Scheinwerfereinsatzes 10 auftretende Abstandsänderungen zwischen dem Vorderrand 22 des Trägerteils 18 und dem Aufnahmeabschnitt 26 ausgleichen. Ist die Neigung der optischen Achse 28 korrekt eingestellt, so wird das Mutterteil 57 wieder an der Platte 50 fest angezogen, so daß der scheinwerfereinsatz 10 fixiert ist. Verläuft die Verstellschraube 54 bei korrekt eingestellter Ausrichtung der optischen Achse 28 in der vertikalen Längsebene VV nicht senkrecht zur Platte 50, kann die Platte 50 unter geringer elastischer Verformung sich an diese Schrägstellung anpassen, so daß denoch eine flächige Anlage des Kopfes 55 der Verstellschraube 54 und des Mutterteils 57 an der Platte 50 und damit eine sichere Fixierung der Verstellschraube 54 ermöglicht ist. Für eine Kontrolle der Einstellung der Neigung der optischen Achse 28 kann mit dem Scheinwerfereinsatz in bekannter Weise eine Wasserwaage 61 verbunden sein, die von außerhalb der Aufnahme 12 sichtbar ist und die die Abweichung der tatsächlichen Neigungseinstellung von einer vorgegebenen korrekten Neigungseinstellung anzeigt. Ist für den Scheinwerfereinsatz 10 nur eine Einstellmöglichkeit der Ausrichtung der optischen Achse 28 in der vertikalen Längsebene VV erforderlich, so braucht die Öffnung 52 in der Platte 50 nicht als Langloch ausgebildet zu sein, sondern ist in ihrem Durchmesser so ausgebildet, daß die Verstellschraube 54 mit geringem Spiel durch diese hindurchtritt.

Bei gelöstem Mutterteil 57 kann außerdem die Ausrichtung der optischen Achse 28 in der horizontalen Längsebene HH eingestellt werden, indem die Verstellschraube 54 im Langloch 52 in Richtung von dessen Längserstreckung verschoben wird. Dabei wird auch der Scheinwerfereinsatz 10 im Bereich seines Arms 42 in horizontaler Richtung bewegt und um seinen im Aufnahmeabschnitt 26 angeordneten vorderen Randbereich geschwenkt. Der Vorsprung 70 wird dabei in der Ausnehmung 72 ebenfalls geschwenkt, was durch dessen kugelförmige Ausbildung ermöglicht ist. Zur Kontrolle der Ausrichtung der optischen Achse 28 in der horizontalen Längsebene HH dient die Nase 46 des Arms 42, die durch die Öffnung 58 in der Platte 50 von oben her sichtbar, ist und die mit der Skala 60 am Rand der Öffnung 58 zusammenwirkt. Die Skala 60 weist eine besonders hervorgehobene Skalenmarkierung 60a auf, auf die die Nase 46 bei korrekt eingestellter Ausrichtung der optischen Achse 28 zeigt, und mehrere weitere, eine Abweichung der Ausrichtung der optischen Achse 28 von der korrekten Ausrichtung anzeigende Skalenmarkierungen 60b.

Durch die vorstehend erläuterte Ausbildung des Scheinwerfers ist es ermöglicht die Einstellung der Ausrichtung der optischen Achse 28 von der Oberseite des Scheinwerfers her vorzunehmen. Außerdem ist mit der einzigen Verstellschraube 54 eine Einstellung der Ausrichtung der optischen Achse 28 des Scheinwerfereinsatzes 10 sowohl in der vertikalen Längsebene als auch in der horizontalen Längsebene ermöglicht. Beide Einstellungen sind dabei unabhängig voneinander möglich, das heißt bei einer Einstellung der Ausrichtung der optischen Achse 28 in der vertikalen Längsebene durch Verdrehung der Verstellschraube 54 wird die Ausrichtung in der horizontalen Längsebene nicht verändert und umgekehrt wird bei einer Einstellung der Ausrichtung der optischen Achse 28 in der horizontalen Längsebene durch Verschieben der Verstellschraube 54 die Ausrichtung in der vertikalen Längsebene nicht verändert.

In den Figuren 6 und 7 ist ein zweites Ausführungsbeispiel der Verstellvorrichtung des Scheinwerfers dargestellt. Die Aufnahme und der Scheinwerfereinsatz sind dabei im wesentlichen wie beim ersten Ausführungsbeispiel beschrieben ausgebildet. Vom Trägerteil 218 steht der Arm 242 nach oben ab, mit dem ein Schraubenbolzen 254 fest verbunden ist, der nach oben absteht und dessen Längsachse 244 zumindest annähernd vertikal verläuft. Vom Arm 242 steht nach oben außerdem die Nase 246 ab. Mit der oberen Wand 231 der Aufnahme ist das plattenförmige Teil 250 fest verbunden, das die Öffnung 252 in Form eines Langlochs aufweist, das mit seiner Längserstreckung zumindest annähernd senkrecht zur optischen Achse 28 und horizontal angeordnet ist. Die Platte 250 weist außerdem die weitere Öffnung 258 auf, die wie das Langloch 252 langgestreckt ausgebildet ist und an dessen Rand die Skala 60 angeordnet ist. Der Schraubenbolzen 254 ragt durch das Langloch 252 nach oben hindurch und auf diesem ist zwischen dem Arm 242 und der Platte 250 ein erstes Mutterteil 256 aufgeschraubt und auf dessen durch das Langloch 252 hindurchragenden Abschnitt ist ein zweites Mutterteil 257 von oben her aufgeschraubt.

Nachfolgend wird zur Verstellvorrichtung gemäß dem zweiten Ausführungsbeispiel die Montage und Funktion beschrieben. Der Scheinwerfereinsatz wird wie beim ersten Ausführungsbeispiel vormontiert und in den Aufnahmeabschnitt 26 eingeschoben. Auf den Schraubenbolzen 254 wird das erste Mutterteil 256 aufgeschraubt, der Schraubenbolzen 254 wird durch das Langloch 252 hindurchgesteckt und auf diesen wird das zweite Mutterteil 257 aufgeschraubt. Durch das Gewicht des Scheinwerfereinsatzes bewirkt wird das zweite Mutterteil 257 in Anlage an die Oberseite der Platte 250 nach unten gezogen, so daß durch die Anordnung des zweiten Mutterteils 257 die Ausrichtung der optischen Achse 28 des Scheinwerfereinsatzes in der vertikalen Längsebene bestimmt ist. Das erste Mutterteil 256 dient dazu, den Schraubenbolzen 254 an der Platte 250 festzuklemmen.

Zur Einstellung der Ausrichtung der optischen Achse 28 in der vertikalen Längsebene wird das zweite Mutterteil 257 gelöst, so daß der Scheinwerfereinsatz im Bereich seines Arms 242 vertikal nach unten bewegt wird und dadurch die Neigung der optischen Achse 28 nach unten verringert wird. Soll die Neigung der optischen Achse 28 nach unten vergrößert werden, so muß zusätzlich auch das erste Mutterteil 256 gelöst werden und anschließend kann das zweite Mutterteil 257 auf dem Schraubenbolzen 254 nach unten gedreht werden. Ist die Ausrichtung der optischen Achse 28 in der vertikalen Längsebene korrekt eingestellt, so wird das erste Mutterteil 256 wieder an der Platte 250 fest angezogen, so daß der Schraubenbolzen 254 an der Platte 250 festgeklemmt ist und der Scheinwerfereinsatz fixiert ist. Zur Einstellung der Ausrichtung der optischen Achse 28 in der horizontalen Längsebene wird nur das erste Mutterteil 256 gelöst, so daß der Schraubenbolzen 254 im Langloch 252 verschoben werden kann. Nach erfolgter Einstellung wird das erste Mutterteil 256 wieder an der Platte 250 fest angezogen, so daß der Schraubenbolzen 254 fixiert ist. Auch bei der Verstellvorrichtung gemäß dem zweiten Ausführungsbeispiel sind die Einstellungen der Ausrichtung der optischen Achse 28 in der vertikalen Längsebene und in der horizontalen Längsebene ohne gegenseitige Beeinflußung möglich.

In Figur 8 ist ein drittes Ausführungsbeispiel der Verstellvorrichtung dargestellt, bei dem diese im wesentlichen wie beim zweiten Ausführungsbeispiel ausgebildet ist. Mit dem Arm 342 des Trägerteils 318 ist der Schraubenbolzen 354 fest verbunden, auf den zwischen dem Arm 342 und der Platte 350 das erste Mutterteil 356 aufgeschraubt ist und auf dessen durch das Langloch 352 in der Platte 350 ragenden Abschnitt das zweite Mutterteil 357 aufgeschraubt ist. Die Platte 350 ist in ihrem das Langloch 352 umgebenden Bereich zumindest annähernd kugelförmig gewölbt ausgebildet, wobei sie an ihrer Oberseite konvex nach oben gewölbt ist und an ihrer Unterseite konkav nach oben gewölbt ausgebildet ist. Die Platte 350 kann auch so ausgebildet sein, daß sie an ihrer Oberseite konkav gewölbt ist und an ihrer Unterseite konvex gewölbt oder an beiden Seiten konvex gewölbt oder an beiden Seiten konkav gewölbt. Die beiden Mutterteile 356 und 357 sind an ihren an der Platte 350 zur Anlage kommenden Seiten ebenfalls entsprechend gewölbt, so daß jeweils zwischen Mutterteil 356 bzw. 357 und Platte 350 eine flächige Anlage ergibt. Durch diese Ausbildung der Platte 350 und der Mutterteile 356,357 ist sichergestellt, daß sich immer eine flächige Anlage ergibt, auch wenn der Schraubenbolzen 354 bei entsprechender Ausrichtung der optischen Achse 28 in der vertikalen Längsebene nicht senkrecht zur Platte 350 durch das Langloch 352 hindurchtritt sondern geneigt angeordnet ist. Die Montage sowie die Funktion der Verstellvorrichtung gemäß dem dritten Ausführungsbeispiel ist gleich wie vorstehend zum zweiten Ausführungsbeispiel beschrieben. Die gewölbte Ausbildung der Platte sowie des Mutterteils kann auch bei der Ausbildung der Verstellvorrichtung gemäß dem ersten Ausführungsbeispiel vorgesehen werden, wo dann entsprechend die Platte 50 im Bereich der Öffnung 52 sowie die Anlageflächen des Schraubenkopfes 55 und des Mutterteils 57 gewölbt ausgebildet sind.

## Patentansprüche

1. Scheinwerfer für Fahrzeuge mit einem Scheinwerfereinsatz (10;110), der zumindest einen Reflektor (16) umfaßt und der an einer Aufnahme (12) schwenkbar gehalten ist und mit einer Verstellvorrichtung, durch die der Scheinwerfereinsatz (10;110) zur Einstellung der Ausrichtung seiner optischen Achse (28) zumindest in einer vertikalen Längsebene (VV) schwenkbar ist, wobei die Verstellvorrichtung einen Schraubenbolzen (254;354) umfaßt, der durch eine Öffnung (252;352) in einem Teil (250;350) der Aufnahme (12) hindurchtritt und an diesem mittels wenigstens eines Mutterteils (256,257;356,357) fixierbar ist, wobei auf den Schraubenbolzen (254;354) zwischen dem Scheinwerfereinsatz (10;110) und dem Aufnahmeteil (250;350) ein erstes Mutterteil (256;356) aufgeschraubt ist, wobei auf den durch die Öffnung (252;352) im Aufnahmeteil (250;350) hindurchragenden Abschnitt des Schraubenbolzens (254;354) ein zweites Mutterteil (257;357) aufgeschraubt ist, wobei beide Mutterteile (257,257;356,357) zur Fixierung des Schraubenbolzens (254;354) in Anlage am Aufnahmeteil (250;350) bringbar sind und wobei bei gelöstem einem Mutterteil (256,257;356,357) durch Drehung des anderen Mutterteils (257,256;357,356) der Scheinwerfereinsatz (10;110) zur Einstellung der Ausrichtung der optischen Achse (28) in der vertikalen Längsebene (VV) schwenkbar ist, dadurch gekennzeichnet, daß der Schraubenbolzen (254;354) nach oben vom Scheinwerfereinsatz (10;110) absteht und nach oben durch die Öffnung (252;352) des Aufnahmeteils (250;350) hindurchragt, daß die Öffnung (252;352) im Aufnahmeteil (250;350) in einer horizontalen und zumindest annähernd zur optischen Achse (28) senkrechten Richtung langgestreckt ausgebildet ist und daß der Schraubenbolzen (254;354) bei zumindest einem gelösten Mutterteil (256,257;356,357) zur Einstellung der Ausrichtung der optischen Achse (28) in einer horizontalen Längsebene (HH) verschiebbar ist.

2. Scheinwerfer für Fahrzeuge mit einem Scheinwerfereinsatz (10;110), der zumindest einen Reflektor (16) umfaßt und der an einer Aufnahme (12) schwenkbar gehalten ist und mit einer Verstellvorrichtung, durch die der Scheinwerfereinsatz (10;110) zur Einstellung der Ausrichtung seiner optischen Achse (28) schwenkbar ist, wobei die Verstellvorrichtung eine Verstellschraube (54) umfaßt, die durch eine Öffnung (52) in einem Teil (50) der Aufnahme (12) hindurchtritt und an diesem mittels wenigstens eines Mutterteils (57) fixierbar ist, wobei die Verstellschraube (54) einen sich am Aufnahmeteil (50) abstützenden Kopf (55) aufweist, wobei die Verstellschraube (54) in eine Gewindebohrung (43) im Scheinwerfereinsatz (10;110) eingeschraubt ist, wobei das Mutterteil (57) zwischen dem Scheinwerfereinsatz (10;110) und dem Aufnahmeteil (50) auf die Verstellschraube (54) aufgeschraubt ist, das zur Fixierung der Verstellschraube (54) in Anlage an das Aufnahmeteil (50) bringbar ist und wobei bei gelöstem Mutterteil (57) die Verstellschraube (54) zur Einstellung der Ausrichtung der optischen Achse (28) verdrehbar ist, dadurch gekennzeichnet, daß die verstellschraube (54) von oben her durch die Öffnung (52) im Aufnahmeteil (50) hindurchgesteckt ist und mit ihrem unteren Ende in die Gewindebohrung (43) im Scheinwerfereinsatz (10;110) eingeschraubt ist, daß durch Verdrehung der Verstellschraube (54) eine Einstellung der Ausrichtung der optischen Achse (28) in einer vertikalen Längsebene (VV) erfolgt, daß die Öffnung (52) im Aufnahmeteil (50) in einer horizontalen und zumindest annähernd zur optischen Achse (28) senkrechten Richtung langgestreckt ausgebildet ist und daß die Verstellschraube (54) bei gelöstem Mutterteil (57) zur Einstellung der Ausrichtung der optischen Achse (28) in einer horizontalen Längsebene (HH) verschiebbar ist.

3. Scheinwerfer nach Anspruch 2, dadurch gekennzeichnet, daß das untere Ende der Verstellschraube (54) durch die Gewindebohrung (43) hindurchragt und daß an diesem Ende ein Sicherungselement (64) lösbar angeordnet ist, das ein vollständiges Herausdrehen der Verstellschraube (54) aus der Gewindebohrung (43) verhindert.

4. Scheinwerfer nach einem der vorstehenden Ansprüche, dadurch gekennzeichnet, daß das Aufnahmeteil (50;250;350) in dem Bereich, in dem die Mutterteile (256,257;356,357) bzw. der Kopf (55) der Verstellschraube (54) und das Mutterteil (57) zur Anlage kommen, gewölbt ausgebildet ist und daß die Mutterteile (57;256,257;356,357) und der Kopf (55) an ihren an diesem Bereich des Aufnahmeteils (50;250;350) zur Anlage kommenden Seiten entsprechend gegensinnig gewölbt ausgebildet sind.

5. Scheinwerfer nach einem der vorstehenden Ansprüche, dadurch gekennzeichnet, daß das Aufnahmeteil (50;250;350) ein separates Teil ist, das fest mit der Aufnahme (12) verbunden ist.

6. Scheinwerfer nach einem der Ansprüche 1 bis 5, dadurch gekennzeichnet, daß das Aufnahmeteil (50;250;350) eine weitere Öffnung (58;258;358) aufweist, die zumindest annähernd parallel zur Öffnung (52;252;352) verläuft, durch die der Schraubenbolzen (254;354) bzw. die Verstellschraube (54) hindurchtritt, und an deren Rand eine Skala (60) angeordnet ist, und daß der Scheinwerfereinsatz (10;110) eine Markierung (46;246) aufweist, die durch die weitere Öffnung (58;258;358) sichtbar ist und die mit der Skala (60) zur Anzeige der Abweichung der Einstellung der Ausrichtung der optischen Achse (28) des Scheinwerfereinsatzes (10;110) von einer vorgegebenen Soll-Einstellung zusammenwirkt.

7. Scheinwerfer nach einem der vorstehenden Ansprüche, dadurch gekennzeichnet, daß der Scheinwerfereinsatz (10;110) an seinem in Lichtaustrittsrichtung (20) weisenden vorderen Randbereich schwenkbar gelagert ist und daß der Schraubenbolzen (254;354) bzw. die Verstellschraube (54) entgegen Lichtaustrittsrichtung (20) vom vorderen Randbereich des Scheinwerfereinsatzes (10;110) entfernt angeordnet ist.

8. Scheinwerfer nach einem der vorstehenden Ansprüche, dadurch gekennzeichnet, daß die Aufnahme (12) einen Abschnitt (26) aufweist, der den Scheinwerfereinsatz (10) zumindest auf einem Teil von dessen Umfang umgibt und daß der Scheinwerfereinsatz (10) im Aufnahmeabschnitt (26) über mindestens ein zwischen dem Scheinwerfereinsatz (10) und dem Aufnahmeabschnitt (26) eingespanntes elastisch verformbares Element (29) schwenkbar gelagert ist.

9. Scheinwerfer nach Anspruch 8, dadurch gekennzeichnet, daß der Aufnahmeabschnitt (26) den Scheinwerfereinsatz (10) auf dessen gesamtem Umfang umgibt und daß das elastisch verformbare Element (29) als ein den Scheinwerfereinsatz (10) im Bereich des Aufnahmeabschnitts (26) auf dessen gesamtem Umfang umgebender Ring ausgebildet ist.

10. Scheinwerfer nach Anspruch 8 oder 9, dadurch gekennzeichnet, daß der Aufnahmeabschnitt (26) etwa hohlzylinderförmig ausgebildet ist, wobei dessen Längserstreckung zumindest annähernd parallel zur optischen Achse (28) des Scheinwerfereinsatzes (10) verläuft und dessen Querschnittsform an die Querschnittsform des Scheinwerfereinsatzes (10) angepaßt ist.

11. Scheinwerfer nach Anspruch 8 oder 9, dadurch gekennzeichnet, daß der Aufnahmeabschnitt durch mehrere über den Umfang des Scheinwerfereinsatzes (10) verteilt angeordnete Stützen (126) gebildet ist, zwischen denen und dem Außenumfang des Scheinwerfereinsatzes (10) jeweils ein elastisch verformbares Element (129) eingespannt ist.

12. Scheinwerfer nach einem der Ansprüche 8 bis 11, dadurch gekennzeichnet, daß der Scheinwerfereinsatz (10) zusätzlich zum Reflektor (16) eine in Lichtaustrittsrichtung (20) vom Reflektor (16) entfernt angeordnete Linse (23) aufweist, die in einem mit dem Reflektor (16) verbundenen Trägerteil (18) gehalten ist, wobei der Scheinwerfereinsatz (10) mit dem Trägerteil (18) im Aufnahmeabschnitt (26) angeordnet ist und das mindestens eine elastisch verformbare Element (29) zwischen dem Trägerteil (18) und dem Aufnahmeabschnitt (26) eingespannt ist.

13. Scheinwerfer nach einem der Ansprüche 1 bis 12, dadurch gekennzeichnet, daß der Scheinwerfereinsatz (10) gegen Verdrehen um die optische Achse (28) gesichert ist.

## Claims

1. Vehicle headlamp having a headlamp insert (10; 110), which comprises at least one reflector (16) and which is held pivotably on a receiving fixture (12), and having an adjusting device, by which the headlamp insert (10; 110) can be pivoted in order to adjust the alignment of its optical axis (28) at least in a vertical longitudinal plane (VV), the adjusting device comprising a screw bolt (254; 354) which passes through an opening (252; 352) in a part (250; 350) of the receiving fixture (12) and can be fixed to said part by means of at least one female part (256, 257; 356, 357), a first female part (256; 356) being screwed onto the screw bolt (254; 354) between the headlamp insert (10; 110) and the receiving fixture part (250; 350), a second female part (257; 357) being screwed onto that portion of the screw bolt (254; 354) which juts through the opening (252; 352) in the receiving fixture part (250; 350), both female parts (256, 257; 356, 357), for the fixation of the screw bolt (254; 354), being able to be brought into bearing contact against the receiving fixture part (250; 350) and, once one female part (256, 257; 356, 357) is loosened, rotation of the other female part (257, 256; 357, 356) allowing the headlamp insert (10; 110) to be pivoted in order to adjust the alignment of the optical axis (28) in the vertical longitudinal plane (VV), characterized in that the screw bolt (254; 354) protrudes upwards from the headlamp insert (10; 110) and juts upwards through the opening (252; 352) of the receiving part (250; 350), in that the opening (252; 352) in the receiving fixture part (250; 350) is of elongated configuration in a horizontal direction running at least approximately perpendicular to the optical axis (28) and in that the screw bolt (254; 354), once at least one female part (256, 257; 356, 357) is loosened, can be displaced in order to adjust the alignment of the optical axis (28) in a horizontal longitudinal plane (HH)

2. Vehicle headlamp having a headlamp insert (10; 110), which comprises at least one reflector (16) and which is held pivotably on a receiving fixture (12), and having an adjusting device, by which the headlamp insert (10; 110) can be pivoted in order to adjust the alignment of its optical axis (28), the adjusting device comprising an adjusting screw (54) which passes through an opening (52) in a part (50) of the receiving fixture (12) and can be fixed to said part by means of at least one female part (57), the adjusting screw (54) having a head (55) supported against the receiving fixture part (50), the adjusting screw (54) being screwed into a threaded bore (43) in the headlamp insert (10; 110), the female part (57) being screwed onto the adjusting screw (54) between the headlamp insert (10; 110) and the receiving fixture part (50), which female part, for the fixation of the adjusting screw (54), can be brought into bearing contact against the receiving fixture part (50) and, once a female part (57) is loosened, the adjusting screw (54) being able to be twisted in order to adjust the alignment of the optical axis (28), characterized in that the adjusting screw (54) is passed from above through the opening (52) in the receiving fixture part (50) and is screwed by its lower end into the threaded bore (43) in the headlamp insert (10; 110), in that rotation of the adjusting screw (54) brings about adjustment of the alignment of the optical axis (28) in a vertical longitudinal plane (VV), in that the opening (52) in the receiving fixture part (50) is of elongated configuration in a horizontal direction running at least approximately perpendicular to the optical axis (28) and in that the adjusting screw (54), once the female part (57) is loosened, can be displaced in order to adjust the alignment of the optical axis (28) in a horizontal longitudinal plane (HH).

3. Headlamp according to Claim 2, characterized in that the lower end of the adjusting screw (54) juts through the threaded bore (43) and in that at this end there is detachably disposed a securing element (64), which prevents the adjusting screw (54) from being fully rotated out of the threaded bore (43).

4. Headlamp according to one of the preceding claims, characterized in that the receiving fixture part (50; 250; 350), in the region in which the female parts (256, 257; 356, 357) or the head (55) of the adjusting screw (54) and the female part (57) enter into bearing contact, is of bowed configuration and in that the female parts (57; 256, 257; 356, 357) and the head (55), on their sides entering into bearing contact against this region of the receiving fixture part (50; 250; 350), are configured such that they are correspondingly bowed in opposite directions.

5. Headlamp according to one of the preceding claims, characterized in that the receiving fixture part (50; 250; 350) is a separate part which is fixedly connected to the receiving fixture (12).

6. Headlamp according to one of Claims 1 to 5, characterized in that the receiving fixture part (50; 250; 350) has a further opening (58; 258; 358), which runs at least approximately parallel to the opening (52; 252; 352) through which the screw bolt (254; 354) or the adjusting screw (54) passes and on whose rim there is disposed a scale (60) and in that the headlamp insert (10; 110) has a marking (46; 246), which is visible through the further opening (58; 258; 358) and which interacts with the scale (60) to indicate the deviation of the adjustment of the alignment of the optical axis (28) of the headlamp insert (10; 110) from a predefined desired setting.

7. Headlamp according to one of the preceding claims, characterized in that the headlamp insert (10; 110), at its front marginal region pointing in the light-radiating direction (20), is pivotably mounted and in that the screw bolt (254; 354) or adjusting screw (54) is disposed remote from the front marginal region of the headlamp insert (10; 110) counter to the light-radiating direction (20).

8. Headlamp according to one of the preceding claims, characterized in that the receiving fixture (12) has a portion (26) which surrounds the headlamp insert (10) at least on part of its periphery and in that the headlamp insert (10) is mounted pivotably in the receiving fixture portion (26) by means of at least one elastically deformable element (29) clamped between the headlamp insert (10) and the receiving fixture portion (26).

9. Headlamp according to Claim 8, characterized in that the receiving fixture portion (26) surrounds the headlamp insert (10) over the whole of its periphery and in that the elastically deformable element (29) is configured as a ring which surrounds the headlamp insert (10), in the region of the receiving fixture portion (26), over the whole of its periphery.

10. Headlamp according to Claim 8 or 9, characterized in that the receiving fixture portion (26) is configured roughly in the shape of a hollow cylinder, its longitudinal extent running at least approximately parallel to the optical axis (28) of the headlamp insert (10) and its cross-sectional shape being matched to the cross-sectional shape of the headlamp insert (10).

11. Headlamp according to Claim 8 or 9, characterized in that the receiving fixture portion is formed by a plurality of stays (126) scattered over the periphery of the headlamp insert (110), between which and the outer periphery of the headlamp insert (110) there is respectively clamped an elastically deformable element (129).

12. Headlamp according to one of Claims 8 to 11, characterized in that the headlamp insert (10) has, in addition to the reflector (16), a lens (23) which is disposed remote from the reflector (16) in the light-radiating direction (20) and which is held in a carrier part (18) connected to the reflector (16), the headlamp insert (10) being disposed with the carrier part (18) in the receiving fixture portion (26) and the at least one elastically deformable element (29) being clamped between the carrier part (18) and the receiving fixture portion (26).

13. Headlamp according to one of Claims 1 to 12, characterized in that the headlamp insert (10) is secured against twisting about the optical axis (28).

## Revendications

1. Phare pour véhicules, comprenant une garniture de phare (10, 110) qui comprend au moins un réflecteur (16) et qui est maintenu sur un logement (12) de façon à pouvoir pivoter, et un dispositif de réglage, au moyen duquel on peut faire pivoter la garniture de phare (10, 110) pour régler l'orientation de son axe optique (28) au moins dans un plan longitudinal vertical (VV), le dispositif de réglage comprenant un boulon fileté (254, 354) qui passe à travers une ouverture (252, 352) dans une partie (250, 350) du logement (12) et qui peut être fixé sur celle-ci au moyen d'au moins un écrou (256, 257, 356, 357), un premier écrou (256, 356) étant vissé sur le boulon fileté (254, 354) entre la garniture de phare (10, 110) et la pièce de réception (250, 350), un deuxième écrou (257, 357) étant vissé sur la section du boulon fileté (254, 354) qui passe à travers l'ouverture (252, 352) dans la pièce de réception (250, 350), les deux écrous ((256, 257, 356, 357) servant à fixer le boulon fileté (254, 354) pouvant être mis en appui sur la pièce de réception (250, 350) et la garniture de phare (10, 110) pouvant pivoter pour régler l'orientation de l'axe optique (28) dans le plan longitudinal vertical (VV) quand un écrou (256, 257, 356, 357) est desserré en faisant tourner l'autre écrou (257, 256, 357, 356)
caractérisé en ce que
• le boulon fileté (254, 354) part vers le haut à partir de la garniture de phare (10, 110) et passe vers le haut à travers l'ouverture (252, 352) de la pièce de réception (250, 350),
• l'ouverture (252, 352) est constituée de façon allongée dans la pièce de logement (230, 350) dans une direction horizontale et perpendiculaire à l'axe optique (28) au moins de manière approximative et
• on peut faire coulisser le boulon fileté (254, 354) au moins quand un écrou (256, 257, 356, 357) est desserré pour régler l'orientation de l'axe optique (28) dans un plan longitudinal horizontal (HH).

2. Phare pour véhicules, comprenant une garniture de phare (10, 110) qui comprend au moins un réflecteur (16) et qui est maintenu sur un logement (12) de façon à pouvoir pivoter, et un dispositif de réglage, au moyen duquel on peut faire pivoter la garniture de phare (10, 110) pour régler l'orientation de son axe optique (28)), le dispositif de réglage comprenant un boulon fileté (54) qui passe à travers une ouverture (52) dans une partie (50) du logement (12) et qui peut être fixé sur celle-ci au moyen d'au moins un écrou (57), la vis de réglage (54) présentant une tête (55) qui prend appui sur la pièce de réception (50), la vis de réglage (54) étant vissée dans un alésage fileté (43) dans la garniture de phare (10, 110), l'écrou (57) étant vissé sur la vis de réglage (54) entre la garniture de phare (10, 110) et la pièce de réception (50), écrou que l'on peut mettre en appui pour fixer la vis de réglage (54) sur la pièce de réception (50), et la vis de réglage (54) pouvant être tournée, quand l'écrou (57) est desserré, pour régler l'orientation de l'axe optique (28),
caractérisé en ce que
• la vis de réglage (54) est enfoncée à partir du haut à travers l'ouverture (52) dans la pièce de réception (50) et peut être vissée par son extrémité inférieure dans l'alésage fileté (43) dans la garniture de phare (10, 110)
• en faisant tourner la vis de réglage (54) on réalise un réglage de l'orientation de l'axe optique (28) dans un plan longitudinal vertical (VV),
• l'ouverture (52) est constituée dans la pièce de réception (50) de façon allongée dans une direction horizontale et perpendiculaire à l'axe optique d'une manière au moins approximative et
• on peut faire coulisser la vis de réglage (54) quand l'écrou (57) est desserré pour régler l'orientation de l'axe optique (28) dans un plan longitudinal horizontal (HH).

3. Phare selon la revendication 2,
caractérisé en ce que
• l'extrémité inférieure de la vis de réglage (54) passe à travers l'alésage fileté (43) et
• à cet extrémité on dispose de façon amovible un élément de sécurité (64) qui empêche d'enlever complètement la vis de réglage (54) de l'alésage fileté (43).

4. Phare selon l'une des revendications précédentes,
caractérisé en ce que
• la pièce de réception (50, 250, 350) dans la zone dans laquelle les écrous (256, 257, 356, 357) ou la tête (55) de la vis de réglage (54) et l'écrou (57) viennent en appui, est constituée de façon bombée et
• les écrous (57, 256, 257, 356, 357) et la tête (55) sont constitués d'une manière bombée en sens contraires sur leurs côtés qui viennent en appui sur cette zone de la pièce de réception (40, 250, 350).

5. Phare selon l'une des revendications précédentes,
caractérisé en ce que
la pièce de réception (50, 250, 350) est une pièce séparée qui est reliée de façon solidaire avec le logement (12).

6. Phare selon l'une des revendications 1 à 5,
caractérisé en ce que
• la pièce de réception (50, 250, 350) présente une autre ouverture (58, 258, 358) qui s'étend au moins de façon approximative en parallèle à l'ouverture (52, 252, 352), autre ouverture (58, 258, 358),à travers laquelle passe le boulon fileté (254, 354) ou la vis de réglage(54), et sur le bord de laquelle est disposée une échelle (60), et
• la garniture de phare (10, 110) présente un repérage (46, 246) qui est visible à travers l'autre ouverture (58, 258, 358) et qui coopère avec l'échelle (60) pour indiquer l'écart de réglage de l'orientation de l'axe optique (28) de la garniture de phare (10, 110) par rapport à un réglage prédéfini de consigne.

7. Phare selon l'une des revendications précédentes,
caractérisé en ce que
• la garniture de phare (10, 110) est montée de façon à pouvoir pivoter sur sa zone de bordure antérieure tournée dans la direction (20) de sortie de la lumière et
• le boulon fileté (254, 354) ou la vis de réglage (54) est disposé en sens opposé à la direction (20) de la sortie de la lumière loin de la zone de bordure antérieure de la garniture de phare (10, 110).

8. Phare selon l'une des revendications précédentes,
caractérisé en ce que
• le logement (12) présente une section (26) qui entoure la garniture de phare (10) au moins sur une partie de son pourtour et
• la garniture de phare (10) est montée de façon à pouvoir pivoter dans la section de réception (26) au moyen d'au moins un élément élastiquement déformable (29) serré entre la garniture de phare (10) et la section de réception (26).

9. Phare selon la revendication 8,
caractérisé en ce que
• la section de réception (26) entoure la garniture de phare (10) sur tout son pourtour et
• l'élément élastiquement déformable (29) est constitué sous la forme d'une bague qui entoure la garniture de phare (10) dans la zone de la section de réception (26) sur tout son pourtour.

10. Phare selon la revendication 8 ou 9,
caractérisé en ce que
la section de réception (26) est constitué avec une forme à peu près cylindrique creuse, son étendue longitudinale se déroulant au moins de façon approximative en parallèle à l'axe optique (28) de la garniture de phare (10), et la forme de sa section transversale étant adaptée à la forme de la section transversale de la garniture de phare (10).

11. Phare selon la revendication 8 ou 9,
caractérisé en ce que
la section de réception (26) est constituée par plusieurs appuis (26) disposés de façon répartie sur le pourtour de la garniture de phare (10), appuis entre lesquels et le pourtour extérieur de la garniture de phare (10) on insère respectivement un élément élastiquement déformable (129).

12. Phare selon la revendication 8 ou 9,
caractérisé en ce que
la garniture de phare (10) présente en plus du réflecteur (16) une lentille (23) qui est disposée à l'écart du réflecteur dans la direction (20) de sortie de la lumière, lentille (23) qui est maintenue dans une pièce de support (18), reliée au réflecteur, la garniture de phare (10) étant disposée avec la pièce de support (18) dans la section de réception (26), et l'un au moins des éléments élastiquement déformables étant inséré entre la pièce de support (18) et la section de réception (26).

13. Phare selon l'une des revendications 1 à 12,
caractérisé en ce que
la garniture de phare (10) est bloqué de façon à ne pas pouvoir tourner autour de l'axe optique (28).
